Europäisches Patentamt

**European Patent Office**

Office européen des brevets

(11) Veröffentlichungsnummer: **0 038 306**
B1

(12) **EUROPÄISCHE PATENTSCHRIFT**

(45) Veröffentlichungstag der Patentschrift:
24.10.84

(51) Int. Cl.³: **F 16 C 32/06**

(21) Anmeldenummer: **81830047.7**

(22) Anmeldetag: **24.03.81**

(54) **Hydrostatisches hydrodynamisches Lager.**

(30) Priorität: **14.04.80 IT 1870680**

(43) Veröffentlichungstag der Anmeldung:
**21.10.81 Patentblatt 81/42**

(45) Bekanntmachung des Hinweises auf die Patenterteilung:
**24.10.84 Patentblatt 84/43**

(84) Benannte Vertragsstaaten:
**CH DE FR GB LI**

(56) Entgegenhaltungen:
**DE - A - 1 953 160**
**DE - A - 2 225 360**
**DE - C - 842 877**
**DE - U - 1 862 598**

**ENGINEERING, Band 188, Dezember 1978, London K.S. STOUT et al. "Design of Externally-Pressurised Fluid-Film Bearings" Teil 3: Design of Hydrostatic Journal Bearings" Seiten 1311 bis 1314**

(73) Patentinhaber: **Bonaccorso, Francesco, Via G. La Farina, 163, I-98100 Messina (IT)**

(72) Erfinder: **Bonaccorso, Francesco, Via G. La Farina, 163, I-98100 Messina (IT)**

(74) Vertreter: **Sneider, Massimo, Lenzi & C. Via del Tritone 201, I-00187 Roma (IT)**

# Beschreibung

## Stand der Technik und Aufgabe der Erfindung

Wie bekannt ist, verleiht man die Benennung einer Zwangsschmierung jener Schmierung, welche man bewirkt, indem Öl mit einem Druck von wenigen kg/cm² in einen Spalt zwischen den gegenüberliegenden Oberflächen des Lagers und des Bolzens eingebracht wird. In Wirklichkeit beweist die Theorie der Schmierung, dass der Auftrieb (Reaktion auf die Last) des Fluidspaltes nicht vom Förderdruck des Öls erzielt wird, sondern vom sehr viel höheren Druck, welcher auf die Mitnahmewirkung des Fluids im Spalt infolge der Relativgeschwindigkeit des Bolzens gegenüber dem Lager zurückzuführen ist. Es ist ebenfalls bekannt, dass, sobald die Relativgeschwindigkeit nach und nach abnimmt und die Last am Bolzen zunimmt, der Fluidspalt nicht weiterbestehen kann und die Mischreibung oder sogar die Gleitreibung die Flüssigkeitsreibung ersetzt mit sich daraus ergebender starker Zunahme des Reibungskoeffizienten und des Verschleisses. Bei einigen heutigen Bauarten sind die Bolzen infolge der Raumerfordernisse oder anderer Gründe meistens stark überlastet und lediglich bei hohen Geschwindigkeiten gelingt es die Flüssigkeitsreibung zu erzielen, während bei mittleren und niedrigen Geschwindigkeiten hohe Reibungskoeffizienten, starker Verschleiss, starke Energiedissipationen und eine sich daraus ergebende starke Wärmeentwicklung hervorgerufen werden; man kann somit behaupten, dass bei der Zwangsschmierung der Flüssigkeitsstrom im Umlauf eine zweifache Funktion hat: die Schmierung und die Kühlung. Es ist an diesem Punkt geboten zu vergegenwärtigen, dass z.B. in Veröffentlichungen (DE-C-842 877 und DE-A-1 953 160) Schmiersysteme mit Hochdruckschmiermittelspeisung verwirklicht wurden, bei denen das Schmiermittel den Fluidspalt durch kombinierte statische und dynamische Einwirkung bei den hohen Geschwindigkeiten und nur durch statische Einwirkung bei den mittleren und kleinen Geschwindigkeiten bewirkt, wobei die Möglichkeit gegeben ist, die Flüssigkeitsreibung bei jeder beliebigen Geschwindigkeit zu erzielen. Das vorgenannte Prinzip wurde sowohl in Radiallagern als auch in Axiallagern angewandt, welche jedoch eine beschränkte Verwendung überwiegend in den Werkzeugmaschinen und vor allem in den Schleifmaschinen haben. Diese Lager weisen bemerkenswerte Vorteile auf, sie bieten jedoch keine hohe Gewähr hinsichtlich der Betriebssicherheit, da die angewandten verschiedenartigen Vorrichtungen für den Abbau des Einführungsdruckes dem Durchgang des Schmiermittels im Laufe des Betriebes keinen konstanten Widerstand leisten und Verstopfungen unterliegen, wenn die Filter des Öls nicht dauernd instandgehalten werden. Daraus ergibt sich die Notwendigkeit komplizierte und kostspielige Ölkreisläufe zu verwenden und infolgedessen die beschränkte Anwendung dieser Lagerart. Die Abbauleitungen des Druckes des Fluids sind bei der vorliegenden Erfindung hingegen von einfacher Ausführung und sicherer Betriebsart, wie dies aus der nachstehenden Beschreibung der Erfindung zu entnehmen ist. Mit der vorliegenden Erfindung, wie sie aus den Ansprüchen 1 und 2 hervorgeht, ist beabsichtigt ein Lager einzuführen, welches auf dem eingangs erwähnten Prinzip (statische-dynamische Unterstützung) beruht, welches mit einfachen Arbeitsverfahren serienmässig und somit preisgünstig hergestellt werden kann, welches sich für einen ausgedehnten Verwendungsbereich eignet und mit den gleichen Montageverfahren wie die laufenden Verfahren für Lager mit Wälzkörpern montiert werden kann. Es ist noch zu unterstreichen, dass die Montageverfahren dieses vorgeschlagenen Lagers viel einfacher sind und weniger den Fehlern und Übelständen unterworfen sind, welche bei der Montage von Lagern mit Wälzkörpern häufig angetroffen werden, wenn diese nicht einwandfrei durchgeführt wird.

## Beschreibung der Erfindung

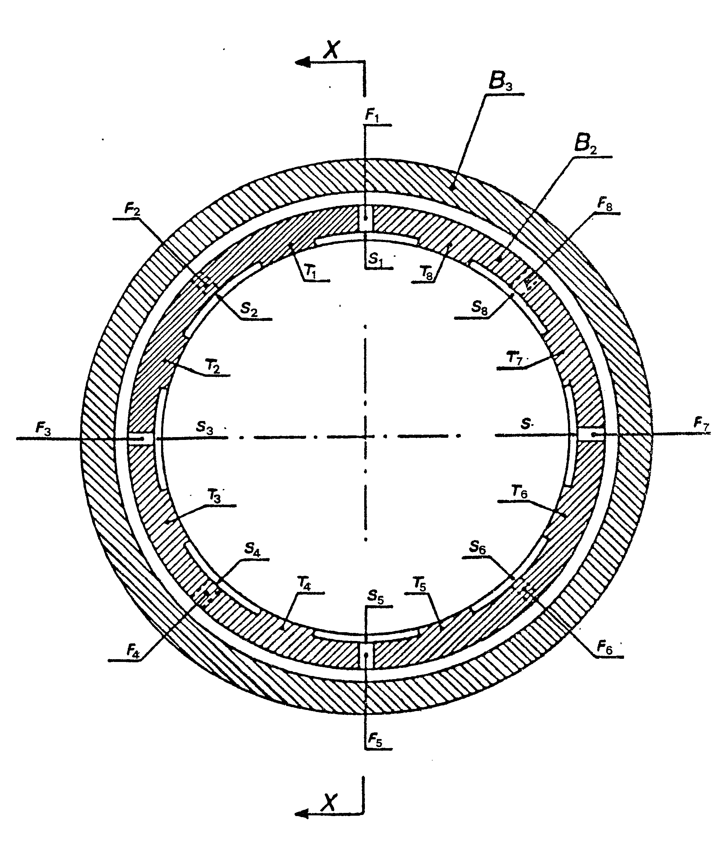

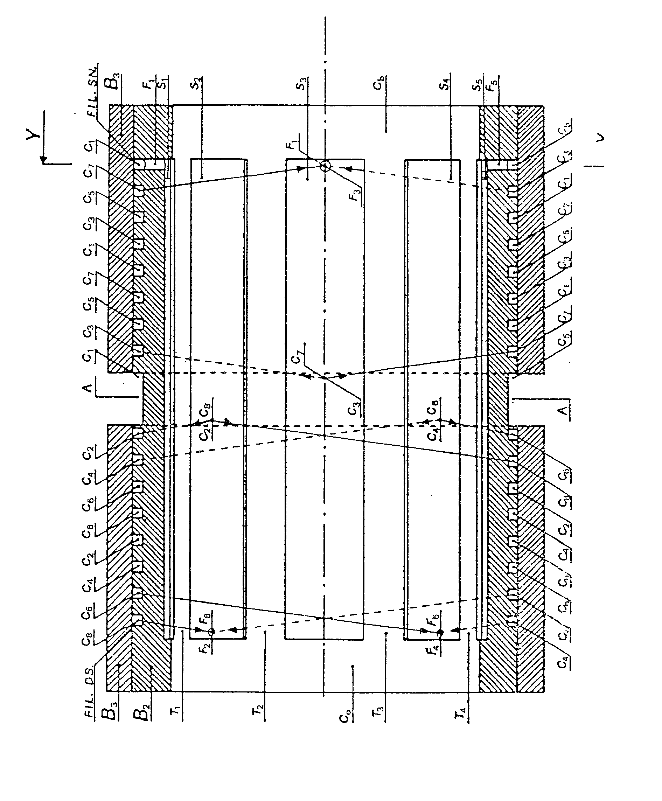

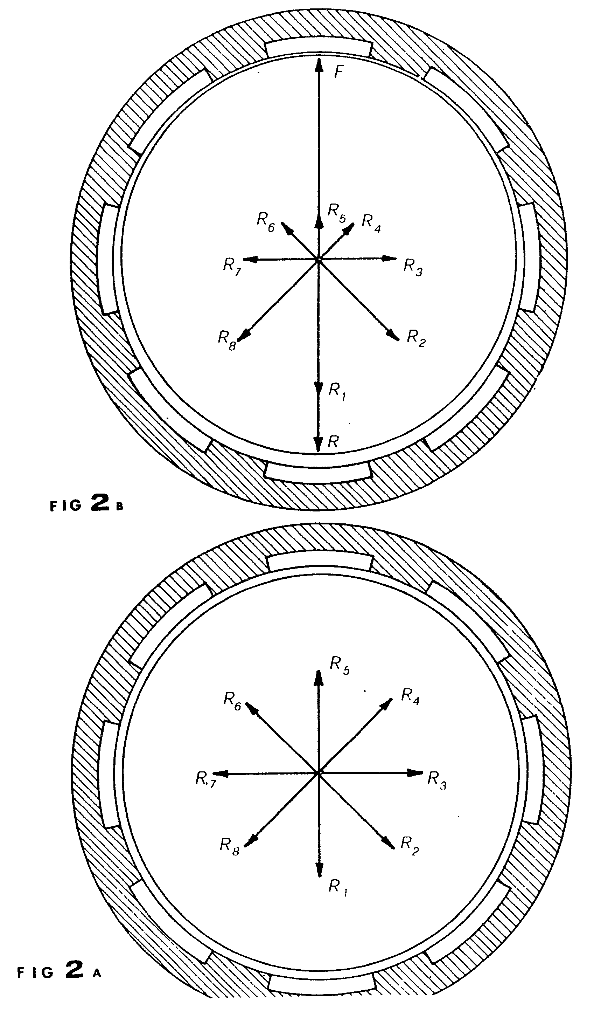

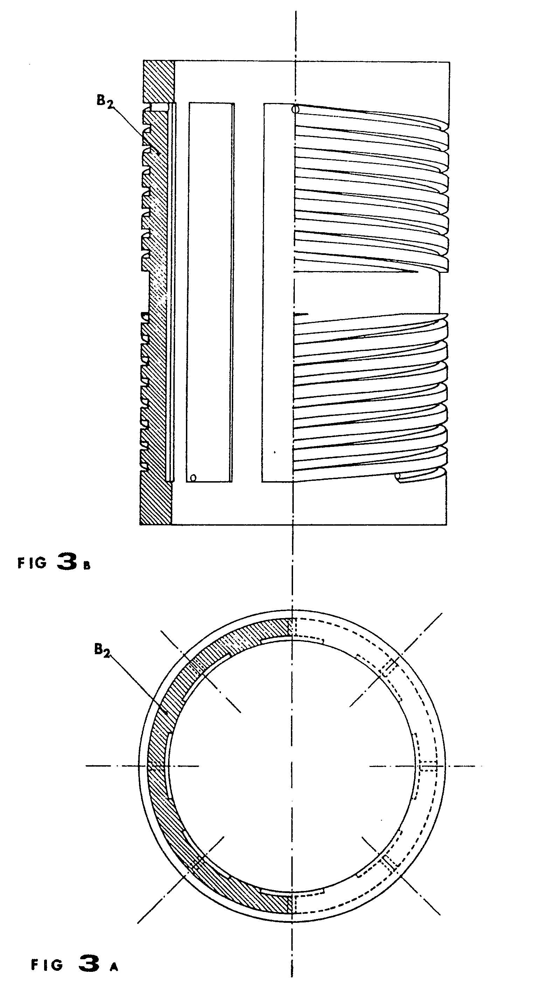

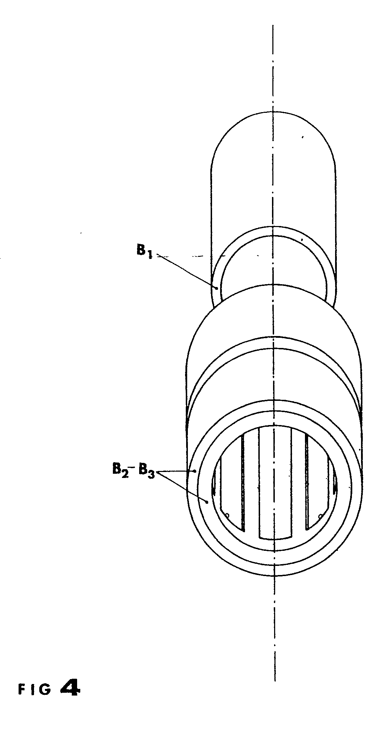

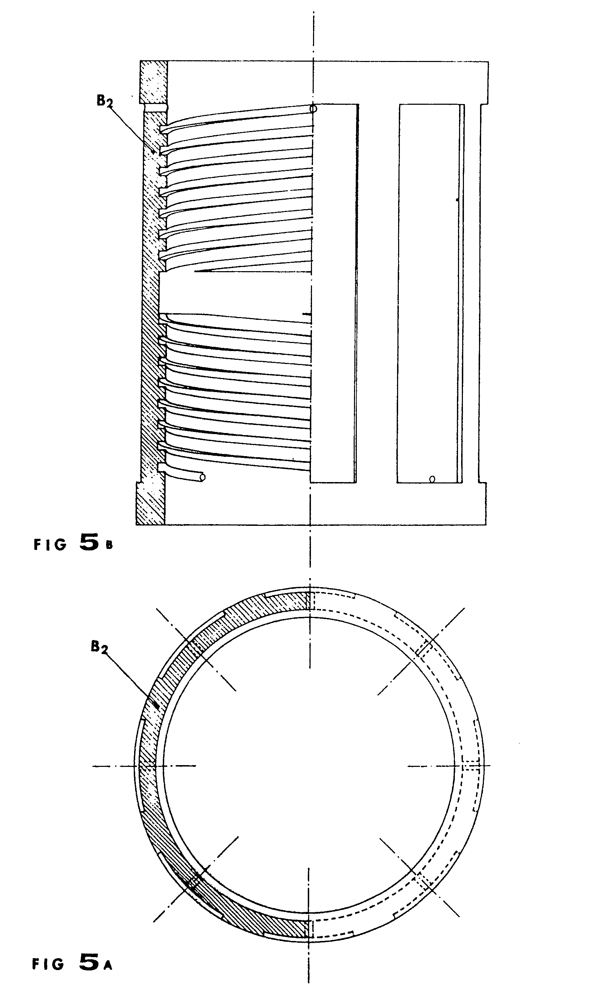

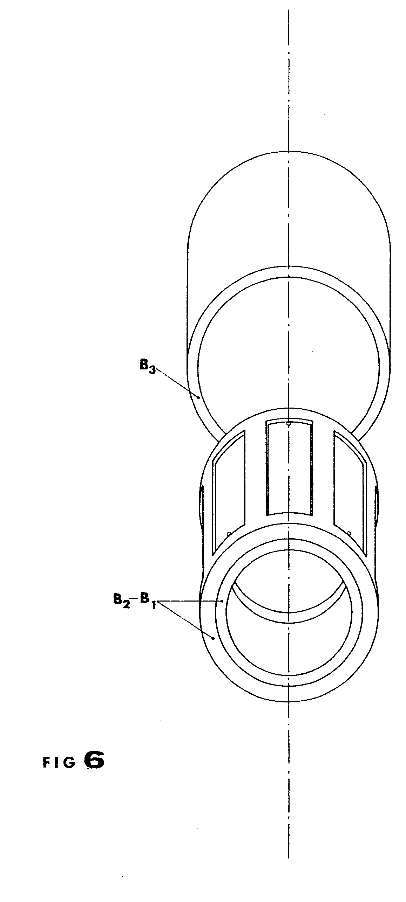

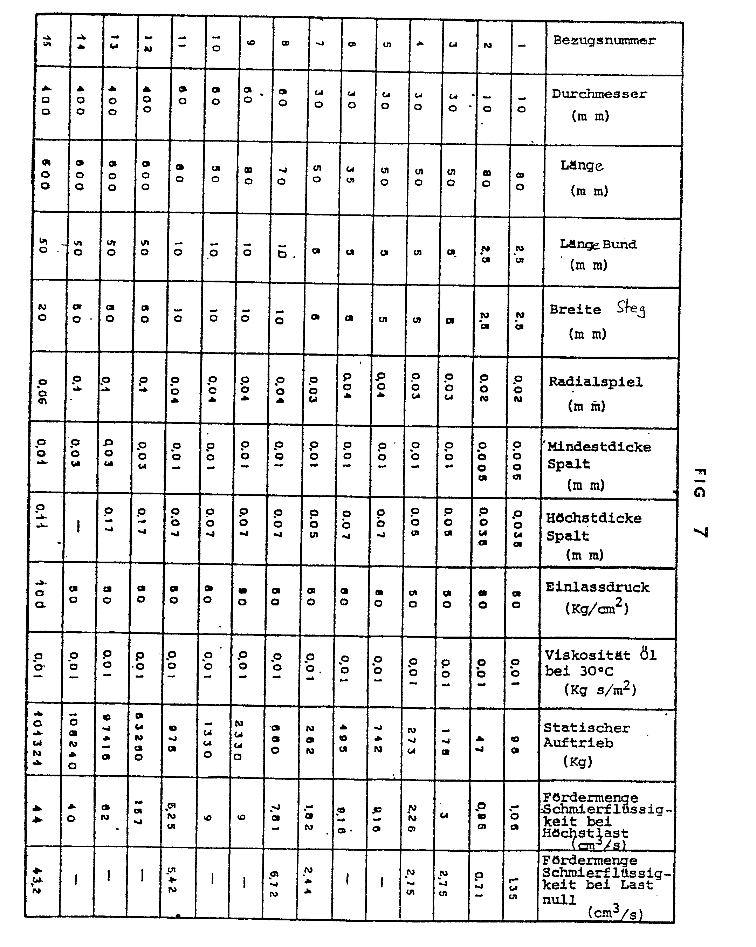

In den anliegenden Zeichnungen zeigen: Fig. 1A und 1B im Querschnitt, bzw. im Längsschnitt, das erfindungsgemässe Lager für eine rotierende Welle; Fig. 2A und 2B im Querschnitt die Lage des Bolzens gegenüber dem Lager bei Lastabwesenheit, bzw. bei Lastanwesenheit; Fig. 3A, 3B und 4 im Querschnitt, bzw. in Längsansicht und teilweise im Schnitt und bzw. in axonometrischer Ansicht das erfindungsgemässe Lager für eine rotierende Welle; Fig. 5A, 5B und 6 gleiche Ansichten wie jene der Fig. 3A, 3B und 4 des erfindungsgemässen Lagers für eine feste Welle; Fig. 7 die hauptsächlichen Ergebnisse der Entwurfberechnung in tabellierter Form.

Die Beschreibung ist bezogen auf ein Lager für eine rotierende Welle. Die Beschreibung hinsichtlich eines Lagers für eine feste Welle ist die gleiche. Das Lager ist in Fig. 1A und 1B schematisch dargestellt. Eine Buchse $B_2$ ist in Freikupplung mit vorbestimmten Spiel mit dem Bolzen einer Welle, d.h. mit einer auf dem Bolzen aufgepressten Buchse gekuppelt; auf der inneren Oberfläche der Buchse $B_2$ ist eine Reihe von gleichentfernten achsialen Kanälen S vorgesehen, und zwar in veränderlicher Anzahl (2, 4, 6, 8 und mehr) je nach dem Durchmesser des Loches und der auf dem Bolzen aufgebrachten Last; die Kanäle S münden nicht nach aussen, sondern bleiben verschlossen von zwei Bundstücken $C_a$ und $C_b$ an den beiden Kopfstücken der Buchse $B_2$ und sind von den zwischen einem und dem darauffolgenden Kanal in Zwischenräumen aufgestellten Stegen T getrennt; bei der dargestellten Buchse sind acht achsiale Kanäle vorgesehen und dieselben sind mit $S_1$, $S_2$, $S_3$, $S_4$, $S_5$, $S_6$, $S_7$ und $S_8$ bezeichnet; auf der äusseren Oberfläche der Buchse $B_2$ sind ebensoviele schraubenförmige Kanäle vorgesehen, welche mit $C_1$, $C_2$, $C_3$, $C_4$, $C_5$, $C_6$, $C_7$, $C_8$ bezeichnet sind; auf der äusseren Oberfläche der Buchse $B_2$ sind zwei Buchsen $B_3$ aufgepresst, welche die Aufgabe haben, die schraubenförmigen Kanäle C zu verschliessen und sie somit in ebensoviele Leitungen umzuwandeln, welche dazu bestimmt sind, den Druck einer sie durchströmenden Flüssigkeit teilweise abzubauen; in Übereinstimmung mit dem mittleren diametralen Schnitt der Buchsen $B_2$–$B_3$ ist eine Ringleitung A eingearbeitet, welche mit der Aussenseite über ein im Gehäuse des Lagers vorgesehenes Loch verbunden ist, wobei das genannte Gehäuse die Gruppe der Buchsen $B_2$–$B_3$ aufnimmt; wie in Fig. 1A, 1B veranschaulicht, sind die schraubenförmigen Leitungen C, vier im Teil rechts und vier im Teil links von der Ringleitung A, untereinander versetzt um 360/8 = 45° und weisen gegenüber dem Durchfluss der Flüssigkeit einen Widerstand auf, welcher abhängig ist vom Ausmass der höchstvorgesehenen Last und vom vorgesehenen Spiel bei der Kupplung zwischen der Buchse $B_2$ und der auf der Welle aufzupressenden Buchse; in Fig. 1A, 1B haben die Leitungen C eine Länge gleich der Abwicklung von zwei schraubenförmigen Windungen, derart, dass jede Leitung C von der Ringleitung A ausgeht und über die Löcher F in die darunterliegenden achsialen Kanäle S mündet; d.h. also, die Leitungen $C_1$, $C_3$, $C_5$ und $C_7$ münden über die entsprechenden Löcher $F_1$, $F_3$, $F_5$ und $F_7$ auf den Kopfstücken rechts der darunterliegenden Kanäle $S_1$, $S_3$, $S_5$ und $S_7$ und die Leitungen $C_2$, $C_4$, $C_6$ und $C_8$ münden über die entsprechenden Löcher $F_2$, $F_4$, $F_6$ und $F_8$ auf den Kopfstücken links der darunterliegenden Kanäle $S_2$, $S_4$, $S_6$ und $S_8$. Das Lager wird vervollständigt von einer in Fig. 1A, 1B nicht ersichtlichen Buchse $B_1$, welche jedoch in der Fig. 4 ersichtlich ist, die wie vorstehend bereits angedeutet dazu bestimmt ist, mit Übermass auf den Bolzen aufgepresst zu werden; zwischen der Buchse $B_2$ und der Buchse $B_1$ besteht das vorbestimmte Spiel für die «optimale» Arbeitsweise der Drehkupplung. In der Tat könnte auf die Buchse $B_1$ auch verzichtet werden, indem das vorgesehene Spiel unmittelbar zwischen der Buchse $B_2$ und der Welle während der Ausführung letzterer bewerkstelligt wird. Es wird jedoch vorgezogen, die Kupplung mit kontrolliertem Spiel zwischen der Buchse $B_2$ und der Buchse $B_1$ während der serienmässigen Fertigung mit der Garantie einer grösseren Genauigkeit zu erzielen.

Arbeitsweise des Lagers

Das Schmiermittel wird dem Lager mit einem den Anwendungen entsprechenden Druck von einer Pumpe zugeführt, welche es über einem Filter aus einer Wanne ansaugt, dasselbe tritt über das im Gehäuse des Lagers vorgesehene Loch in die Ringleitung A (siehe Fig. 1A, 1B) ein, von dieser wird es in die Abbauleitungen C verteilt, von letzteren geht es in die achsialen Kanäle S über die Löcher F und mündet zur Aussenseite über die Bundstücke $C_a$ und $C_b$, wobei es sich in der Wanne ansammelt, von welcher es von der Pumpe wieder in den Kreislauf gebracht wird.

Wenn man annimmt, dass auf den Bolzen keine Last einwirkt, so wird der Bolzen mit dem Lager koaxial sein (Fig. 1A) und zwischen den Bundstücken $C_a$ und $C_b$ und den Stegen T wird sich ein Spalt regelmässiger Dicke gleich dem Radialspiel ausbilden; das Schmiermittel wird von jedem achsialen Kanal S zur Aussenseite über den entsprechenden Spalt mit gleicher Fördermenge für jeden achsialen Kanal fliessen; die Fördermengen werden in jeder Abbauleitung C gleich sein, und somit wird der Druckabfall in den Abbauleitungen gleich sein, wobei der Einlassdruck im Lager gleich bleibt; die Drücke in jedem achsialen Kanal S werden gleich sein, die radialen Kräfte R, welche auf den Bolzen infolge des Druckes der Flüssigkeit in den achsialen Kanälen S und in den Stegen T einwirken, werden gleich sein und ihre Resultante wird null sein; am Bolzen wird es somit keine Gegenwirkung des Lagers geben.

Wenn man annimmt, dass auf den Bolzen eine Last F einwirkt, so wird der Bolzen gegenüber dem Lager eine exzentrische Lage einnehmen (siehe die Fig. 2B); zwischen den Bundstücken $C_a$ und $C_b$ und den Stegen T wird sich ein Spalt veränderlicher Dicke ausbilden, deren Mindestwert gleich dem Radialspiel minus die Exzentrizität sein wird und deren Höchstwert gleich dem Radialspiel plus die Exzentrizität sein wird; in diesem Fall wird die Fördermenge der Flüssigkeit minimal sein für den axialen Kanal, welcher sich an der kleinsten Durchschnittsdicke des Spaltes befindet, und wird für die nachfolgenden axialen Kanäle allmählich ansteigen, um schliesslich maximal zu sein für den axialen Kanal, welcher sich an der grössten Durchschnittsdicke des Spaltes befindet; auch in den Abbauleitungen C, welche die axialen Kanäle S speisen, wird sich die Fördermenge zwischen einem Mindestwert und einem Höchstwert verändern und als Folge davon wird der Druckabfall, welcher bei Leitungen mit Laminarzustand proportional zur Fördermenge ist, für jede Leitung C verschieden sein; bei gleichbleibendem Einlassdruck im Lager wird sich somit der Druck in den Kanälen S von einem Mindestwert im axialen Kanal entsprechend dem Spalt grösster Durchschnittsdicke auf einen Höchstwert im axialen Kanal entsprechend dem Spalt kleinster Durchschnittsdicke verändern; die radialen Kräfte R, welche auf den Bolzen infolge des Druckes der Flüssigkeit in den axialen Kanälen S und in den Stegen T einwirken, werden proportional zu den Drücken sein, und ihre Resultante, wie die Fig. 2B veranschaulicht, wird gleich und entgegengesetzt zur Last sein. Der Wert der Gegenwirkung wird umso höher sein je grösser der Druck des Fluids beim Einlass des Lagers, das Spiel und die Exzentrizität sind. Der Widerstand beim Durchfluss der Flüssigkeit, welcher von den Abbauleitungen entgegengesetzt wird, hängt von der Länge und dem Querschnitt derselben ab; die Abbauleitungen müssen derart bemessen werden, dass man in den axialen Kanälen einen optimalen Differenzdruck hat, dem der gewünschte Auftrieb des Lagers nach einem Berechnungssystem entspricht, das hier weggelassen wird. Die Abbauleitungen werden unterschiedliche Abmessungen und somit unterschiedliche Widerstände beim Durchfluss der Flüssigkeit aufweisen, wenn die Last annähernd gleichen Sinn und Richtung aufweist und nur im Ausmass veränderlich ist; sie werden alle die gleichen Abmessungen und somit gleichen Widerstand beim Durchfluss der Flüssigkeit haben, wenn die Last in Sinn und Richtung ausser im Ausmass veränderlich ist. Eine Grenze wird dem Höchstauftrieb des Lagers ausser von den Abmessungen desselben natürlich von der Zweckmässigkeit gesetzt werden, dem Einlassdruck und dem Spiel nicht aussergewöhnliche Werte zu geben, welche aussergewöhnlichen Durchflussmengen entsprechen würden, und der Mindestdicke des Spalts im Hinblick auf den Fertigungsgrad der gegenüberliegenden Oberflächen nicht zu kleine Werte zu geben, damit an die Stelle der Flüssigkeitsreibung nicht eine Mischreibung tritt. Die Berechnung des Auftriebes des Lagers, welche wie erwähnt hier weggelassen wird, erfolgt mit den Formeln, welche das Laminarregime, d.h. den Laminarzustand, in den Leitungen kleinen Durchschnittes und in den Spalten kleiner Dicke regeln, indem ein System von so vielen Gleichungen aufgelöst wird als die axialen Kanäle dividiert durch zwei sind (das System wird gegenüber der Wirkungsgeraden der Kraft als symmetrisch angesehen); jede Gleichung bringt die Gleichheit zwischen der Einlassfördermenge in jede Abbauleitung und der Auslassfördermenge aus jedem axialen Kanal zum Ausdruck, wobei zu vergegenwärtigen ist, dass ausser der Flüssigkeit, welche wegen den in den axialen Kanälen herrschenden unterschiedlichen Drücken aus den beiden Kopfstükken der Buchse ausströmt, ein Durchfluss von Fluid aus dem Kanal höheren Drucks zu jenem benachbarten niedrigeren Drucks über die Stege T bewirkt wird.

Wie aus den vorstehenden Ausführungen zu entnehmen ist, beruht das Lager ausser auf der dynamischen Unterstützung auch auf der statischen Unterstützung infolge der Differenzdrükke. Dieses Prinzip wurde in einigen Versuchsanstalten insbesondere für Drucklager geprüft, z.B. bei einigen mit Gleitbacken versehenen Schlitten und bei einigen Drehkupplungen. Es konnte jedoch bisher nicht in grossem Massstab angewandt werden, da die geplanten Vorrichtungen kompliziert, unwirtschaftlich und im Betrieb unsicher sind. Das in Frage stehende Lager löst alle Probleme auf einfache Weise, wie aus der bereits gemachten Beschreibung und den nachfolgenden Betrachtungen entnommen werden kann.

Vorzüge des Lagers

Es sollen hier die Vorteile zusammengefasst werden, welche das in Frage stehende Lager betreffs seiner Bauweise und seiner Montage aufweist:

a) Bauweise

Das erfindungsgemässe Lager wird in zwei Ausführungen dargestellt: Lager für rotierende Wellen und Lager für feste Wellen.

Das Lager für rotierende Wellen (Fig. 3A, 3B, 4) besteht aus der Buchse $B_2$, welche innen die axialen Kanäle und aussen die schraubenförmigen Kanäle aufweist; auf die äussere Oberfläche der Buchse $B_2$ ist die Buchse $B_3$ aufgepresst; die Buchse $B_1$, welche bestimmt ist, auf den Bolzen aufgepresst zu werden, ist im Gleitsitz mit vorbestimmten Spiel auf der Buchse $B_2$ gelagert; die Zuführung der Druckflüssigkeit erfolgt über das ortsfeste Gehäuse des Lagers. Das Lager wird dargestellt mit den Buchsen $B_2$ und $B_3$ gekuppelt und der Buchse $B_1$ frei.

Das Lager für feste Wellen (Fig. 5A, 5B, 6) besteht aus der Buchse $B_2$, welche aussen die axialen Kanäle und innen die schraubenförmigen Leitungen aufweist; auf die innere Oberfläche der Buchse $B_2$ ist die Buchse $B_1$ aufgepresst; die Buchse $B_3$, welche bestimmt ist, in das Gehäuse des Lagers eingepresst zu werden, ist im Gleitsitz mit vorbestimmtem Spiel auf der Buchse $B_2$ gelagert; die Zuführung der Druckflüssigkeit erfolgt über eine in der Welle herausgearbeitete Leitung. Das Lager wird dargestellt mit den Buchsen $B_1$ und $B_2$ gekuppelt und der Buchse $B_3$ frei.

In beiden Ausführungen des Lagers kann die freie Buchse $B_1$ oder $B_3$ mit oder ohne Schultern gebaut sein, und zwar je nachdem man begrenzten axialen Beanspruchungen entgegenwirken muss oder nicht; das gleiche Resultat kann mit konischen statt zylindrischen Buchsen erhalten werden.

Wie aus der bereits gemachten Beschreibung hervorgeht, besteht das Lager in beiden Ausführungen aus drei mit $B_1$, $B_2$ und $B_3$ bezeichneten Buchsen; die Buchsen $B_1$ und $B_3$ bestehen aus zwei Ringen einfacher Gestaltung; die Buchse $B_2$ weist infolge der Anwesenheit der axialen Kanäle und der schraubenförmigen Leitungen eine kompliziertere Gestaltung auf; alle drei Buchsen sind geeignet, in Grosserien gemäss modernster technologischer Verfahren gefertigt zu werden, und zwar mit relativ niedrigen Herstellungskosten, jedenfalls geringer als die Herstellungskosten der Gleitlager, welche zum grössten Teil nicht in Serien hergestellt werden können, und als die Herstellungskosten von Lagern mit Wälzkörpern. Was die Passung zwischen den aufgezogenen oder aufgepressten freien Buchsen betrifft, sind die Arbeitstoleranzen jene üblichen für Spielpassungen; die Passung kann mit mittlerer Toleranz für geläufige Lager verwirklicht sein; sie muss genau sein nur für die Lager, wo die Änderung der Exzentrizität zwischen Bolzen und Lager von kleinem Ausmass sein soll.

b) Montage

Die Montage des Lagers muss nach analogen Normen vorgenommen werden, wie diese bei der Montage von Lagern mit Wälzkörpern angewandt werden. Bei den Lagern für rotierende Welle muss die Buchse $B_1$ auf die Welle aufgezogen werden und die Gruppe der Buchsen $B_2$–$B_3$ muss im Gehäuse mit leicht eingetriebener Passung gelagert sein. Bei den Lagern für feste Welle muss die Buchse $B_3$ in das Gehäuse eingepresst werden und die Gruppe der Buchsen $B_1$–$B_2$ muss mit der Welle mit leicht eingetriebener Passung gekuppelt sein. Fluchtfehler zwischen dem Lager und der Welle sollen vermieden oder begrenzt werden.

Wie eben erwähnt, sind die für die Montage des in Frage stehenden Lagers zubeachtenden grundsätzlichen Normen die gleichen, wie sie bei der Montage von Lagern mit Wälzkörpern zur Anwendung kommen, aber sie sind weitaus einfacher und erfordern vor allem weniger Sorgfalt bei der Bearbeitung der Wellen und der Aufnahmegehäuse sowie weniger Montagesorgfalt, wie dies aus den nachstehenden Betrachtungen entnommen werden kann:

1. Das in Frage stehende Lager ist in zwei Stücken dargestellt, welche getrennt montiert werden können, eines auf der Welle und eines im Lagergehäuse; das Lager mit Wälzkörpern hingegen ist ausser einigen Fällen in einer einzigen Gruppe dargestellt.

2. Das Spiel zwischen den Ringen im Lager mit Wälzkörpern beträgt wenige Mikron, und eine übermässige Interferenz bei der Montage des aufgezogenen Ringes kann eine Blockierung der Wälzkörper hervorrufen, wodurch der Reibungskoeffizient stark erhöht und die Lebensdauer des Lagers selbst stark vermindrt wird; beim in Frage stehenden Lager beträgt das Spiel im Gleitsitz einige Hundertstel mm und eine falsche Treibung der Buchse kann sie leicht vermindern, aber nicht annullieren.

3. Im Falle von Fluchtabweichungen zwischen Lager und Welle durch Montagemängel werden die Lager mit Wälzkörpern rasch abgenutzt, es sei denn, dass sie verstellbar sind; das in Frage stehende Lager hingegen kann ohne Schäden fühlbare Fluchtabweichungen ertragen.

4. Die Lager mit Wälzkörpern sind gegen Schmutz und Fremdkörper äusserst empfindlich, während das in Frage stehende Lager diesem Übelstand nur wenig ausgesetzt ist, zumal der äussere Schmutz nicht in den Spalt eindringen kann.

Vergleich mit dem Lager mit Wälzkörpern

1. Das in Frage stehende Lager weist gegenüber dem Lager mit Wälzkörpern grössere Gesamtabmessungen in der Länge und kleinere gemäss dem Durchmesser auf.

2. Das in Frage stehende Lager weist eine praktisch unbegrenzte Lebensdauer auf, während das Lager mit Wälzkörpern eine begrenzte Lebensdauer aufweist, auch wenn es einwandfrei montiert ist.

3. Im Falle eines Fressens infolge eines kompletten Mangels von Schmierflüssigkeit kann das in Frage stehende Lager bequemer ersetzt werden als das Lager mit Wälzkörpern.

4. Im Gegensazt zum Lager mit Wälzkörpern weist das in Frage stehende Lager ein Vermögen auf, um auf sprunghafte Änderungen und Umwandlungen der Last, ohne Schaden zu erleiden, augenblicklich zu reagieren.

5. Das Radiallager mit Wälzkörpern weist ein geringes oder kein Vermögen auf, um auf axiale Beanspruchungen zu reagieren, während das in Frage stehende Lager mit Buchse (mit Schultern oder konisch ausgebildet), obgleich es ein Radiallager ist, in der Lage ist, ausser auf radiale auch auf axiale Beanspruchungen zu reagieren (natürlich innerhalb gewisser Grenzen).

6. Das Schmierungssystem des in Frage stehenden Lagers ist wohl etwas komplizierter als die für die Schmierung der Lager mit Wälzkörpern üblich angewandten Systeme, aber es ist hier zu bemerken, dass für letztere, wenn intermittierende Schmierungssysteme zur Anwendung kommen, die Erneuerung des Schmiermittels (Fett oder Öl) nicht immer wie vorgeschrieben durchgeführt wird, und das Lager vor Einbringung von Schmutz und Fremdkörpern schwierig geschützt werden kann; wenn Schmierungssysteme mit kontinuierlichem Kreislauf (Öl oder zerstäubtes Öl) vorgesehen sind, sind diese gewiss nicht weniger kompliziert als das Schmierungssystem des in Frage stehenden Lagers.

Vergleich mit dem Gleitlager mit Zwangsschmierung

1. Das in Frage stehende Lager weist geringere Reibungskoeffizienten auf als die Reibungskoeffizienten, welche man bei den geläufigen Gleitlagern vorfindet, auch bei hohen Geschwindigkeiten, weitaus geringere bei niedrigen Geschwindigkeiten, insbesondere in den Übergangsphasen beim Anlaufen und beim Anhalten.

2. Das geläufige Gleitlager, welches auch immer die baulichen Kunstgriffe sein mögen, verschlechtert mit dem Fortschritt des Verschleisses seine Leistung, insofern sein Auftrieb abnimmt und die untere Grenze der Geschwindigkeit zunimmt, bei der die Misch- oder Gleitreibung an die Stelle der Flüssigkeitsreibung tritt; beim in Frage stehenden Lager dürfte ein solcher Verschleiss nicht auftreten, gegebenenfalls in den Einlaufphasen, wenn Arbeitsungenauigkeiten vorliegen sollten; wenn die Ungenauigkeiten einmal beseitigt sind, stellt sich der Verschleiss ein oder wird bedeutungslos. Es ist angebracht hier zu unterstreichen, dass, wo durch verfehlte Bemessung des in Frage stehenden Lagers sich ein gewisser Verschleiss in der Anfangsphase zeigen sollte, das Lager dazu neigen würde, seine Leistung hinsichtlich des Auftriebes mit dem Fortschritt des Verschleisses zu verbessern, welcher nach Erreichen des normalen Spieles aufhören würde.

3. Das geläufige Gleitlager kann für die meisten Anwendungsfälle nicht serienmässig hergestellt werden und ist auch viel teurer als das Lager mit Wälzkörpern und noch viel teurer als das in Frage stehende Lager; die Ersetzung des geläufigen beschädigten, bzw. abgenutzten Gleitlagers ist kostspielig und erfordert häufig zusätzliche Arbeiten für die Nachbearbeitung der Welle und des Gehäuses; der Ersatz des in Frage stehenden Lagers, welcher nur im Falle eines Fressens infolge mangelhafter Zuführung des Schmiermittels erforderlich ist, ist viel einfacher und erfolgt, wie bereits erwähnt, mit den gleichen Modalitäten, welche für die Lager mit Wälzkörpern in Gebrauch sind.

4. Die Spiele und die Arbeitstoleranzen des in Frage stehenden Lagers sind im allgemeinen von der gleichen Grössenordnung wie jene bei den üblichen Gleitlagern, sie können jedoch auch grösser sein, wo eine grössere Schmiermittelfördermenge zulässig ist, da, wie bereits angedeutet, die Zunahme des Spiels die Leistung des Lagers verbessert.

5. Die bei den üblichen Gleitlagern angewandten spezifischen Mitteldrücke (20–100 kg/cm²) können bei dem in Frage stehenden Lager erreicht und sogar überstiegen werden.

Hinweise auf eine zentralisierte Anlage zur Versorgung einer Gruppe von Lagern

Eine alleinige Pumpe kann eine Gruppe von Lagern über ein Versorgungsnetz mit Druck versorgen; wenn die Lager solche für rotierende Wellen sind, so werden die einzelnen Versorgungsrohre an die Lager angeschlossen; wenn die Lager hingegen solche für feste Wellen sind, so erfolgt die Speisung, d.h. die Versorgung über die gelochte Welle und die einzelnen Versorgungsrohre werden an die Wellen angeschlossen. Bei den vorgeschlagenen, d.h. also bei den in Frage stehenden Lagern erfährt die Fördermenge nicht grosse Veränderungen mit der Veränderung der Trimmlage des Lagers in Abhängigkeit von der Last, und die Fördermenge der Gleichdruckpumpe muss sich nach dem Schmierflüssigkeitsbedarf der Lager verändern; die Fördermenge der Pumpe muss demnach gegenüber der gesamten von der Gruppe der Lager verlangten Höchstfördermenge im leichten Übermass vorgesehen sein; das Schmierflüssigkeitsübermass wird in den Absaugbehälter über einen Beipass abgeleitet, welcher von einem Ventil geregelt wird, das mit Bezug auf den vorgesehenen Förderdruck geeicht ist. Wenn die Durchschnitte der Versorgungsrohre angemessen sind, so sind die diesbezüglichen Lastverluste gering, und somit sind auch die Veränderungen des Einlassdruckes in den einzelnen Lager bei der Veränderung des Schmierflüssigkeitsbedarfs gering, aber, wenn auch der Einlassdruck in einem Lager bemerkenswert absinken sollte, so könnte dasselbe gleichfalls weiter arbeiten, da bei Abnahme des Einlassdruckes das Lager den Auftrieb durch Zunahme der Exzentrizität aufrecht erhalten würde; der Einlassdruck darf naheliegenderweise nicht unter eine bestimmte Grenze absinken, wenn man wünscht, dass das Lager im fluid-statischen Beharrungszustand arbeitet. An dieser Stelle ist es jedoch zweckmässig hervorzuheben, dass das in Frage stehende Lager wie ein geläufiges Lager auch mit Niederdruckversorgung arbeiten kann, und wenn der Einlassdruck infolge einer Störung usw. des Versorgungskreislaufes stark oder zeitweilig absinken würde, so könnte kein Schaden eintreten; ein Fressen würde nur bei vollständigem Fehlen der Schmierung zu befürchten sein.

Erprobung des Lagers

Das Lager wurde in mehreren Ausführungen erprobt; je nach Geschwindigkeit und Lagerart wurden veränderliche Reibungskoeffizienten zwischen 0,0001 und 0,003 erfasst; es wurden Verschleissversuche bei niedriger und hoher Geschwindigkeit, und zwar mit häufigem Anlaufen und häufigem Anhalten, während Hunderter von Stunden vorgenommen, ohne nennenswerte Zeichen eines Verschleisses feststellen zu können.

Berechnungsergebnisse einiger Lager

In der Fig. 7 werden die Ergebnisse der Berechnungen wiedergegeben, welche sich auf 15 Lager unterschiedlicher Arten und Abmessungen beziehen.

1. Kleines Lager mit zwei axialen Kanälen mit zwei Abbauleitungen unterschiedlichen Widerstandes für Lasten konstanter Richtung und konstanten Sinnes, veränderlich in der Intensität, anzuwenden als Rollbuchse oder für kleine Wellen.

2. Kleines Lager mit zwei axialen Kanälen mit zwei Abbauleitungen gleichen Widerstandes für Lasten konstanter Richtung, entgegengesetzter Sinne, veränderlich in der Intensität; kann als Lager gemäss Punkt 1 angewandt werden.

3. Lager mit zwei axialen Kanälen mit zwei Abbauleitungen gleichen Widerstandes für Lasten konstanter Richtung, entgegengesetzter Sinne, veränderlich in der Intensität.

4. Lager mit den gleichen Merkmalen, den gleichen Abmessungen und der gleichen Trimmlage wie das Lager gemäss Punkt 3. Das Spiel zwischen den beiden Stegen und der Welle, anstatt gleich zu sein gegenüber dem Radialspiel, ist verringert von 0,03 mm auf 0,015 mm; man erhält eine Zunahme des Auftriebes und eine Abnahme der Schmiermittelflüssigkeit unter Last.

5. Lager mit zwei axialen Kanälen mit zwei Abbauleitungen unterschiedlichen Widerstandes für Lasten konstanter Richtung und konstanten Sinnes, veränderlich in der Intensität innerhalb eines beschränkten Gebietes. Das Spiel zwischen den Stegen und der Welle, anstatt gleich zu sein gegenüber dem Radialspiel, ist verringert von 0,04 mm auf 0,02 mm. Man erhält eine starke Zunahme des Auftriebes. Man kann das Gebiet der Veränderlichkeit des Auftriebes vom Höchstwert auf Null erheben, wobei eine starke Veränderung der Schmierflüssigkeitsfördermenge zu ertragen ist.

6. Lager mit den gleichen Abmessungen und der gleichen Trimmlage wie das Lager gemäss Punkt 5, jedoch verringerter Länge (kurzes Lager).

7. Lager mit acht axialen Kanälen mit acht Abbauleitungen gleichen Widerstandes für Lasten veränderlicher Richtung und veränderlichen Sinnes und veränderlicher Intensität.

8. Lager mit zwei axialen Kanälen mit zwei Abbauleitungen gleichen Widerstandes für Lasten konstanter Richtung, entgegengesetzter Sinne, veränderlich in der Intensität.

9. Lager mit analogen Merkmalen wie jene des Lagers gemäss Punkt 5 grösserer Abmessungen.

10. Lager mit den gleichen Merkmalen, den gleichen Abmessungen und der gleichen Trimmlage wie das Lager gemäss Punkt 9, jedoch mit verringerter Länge (kurzes Lager).

11. Lager mit acht axialen Kanälen mit acht Abbauleitungen gleichen Widerstandes für Lasten unterschiedlicher Richtung, unterschiedlichen Sinnes und unterschiedlicher Intensität.

12. Lager grosser Abmessungen für hohe Lasten mit zwei axialen Kanälen mit zwei Abbauleitungen unterschiedlichen Widerstandes für Lasten konstanter Richtung und konstanten Sinnes, veränderlicher Intensität. Das Spiel zwischen zwei Stegen und der Welle, anstatt gleich zu sein gegenüber dem Radialspiel, ist von 0,1 mm auf 0,03 mm verringert. Für dieses Lager gilt das gleiche, wie für das Lager gemäss Punkt 5 angegeben ist. Die Last kann vom Höchstwert auf Null geändert werden, aber die Schmiermittelflüssigkeitsfördermenge geht von 157 Kubikzentimeter pro Sekunde auf 295 Kubikzentimeter pro Sekunde.

13. Lager mit den gleichen Merkmalen und den gleichen Abmessungen wie das Lager gemäss Punkt 12, jedoch mit ausgeprägterer Differenz zwischen $K_s$ und $K_i$. Der Auftrieb nimmt zu, aber das Veränderlichkeitsgebiet der Last nimmt stark ab; die Veränderung der Schmiermittelflüssigkeitsfördermenge nimmt stark zu mit der Veränderung der Last: einem Höchstauftrieb von 97 416 kg entspricht eine Flüssigkeitsfördermenge von 62 Kubikzentimeter pro Sekunde; einem Auftrieb von 52 866 kg entspricht eine Flüssigkeitsfördermenge von 277 Kubikzentimeter pro Sekunde.

14. Lager mit den gleichen Merkmalen, den gleichen Abmessungen und der gleichen Trimmlage wie das Lager gemäss Punkt 12, jedoch mit einer noch ausgeprägterer Differenz $K_i = 0$ zwischen $K_s$ und $K_i$. Von diesem Lager wird somit nur eine Halbschale versorgt. Der Auftrieb nimmt noch mehr zu, aber das Veränderlichkeitsgebiet der Last nimmt weiter ab, die Veränderung der Schmierflüssigkeitsfördermenge nimmt noch viel stärker zu als im Fall gemäss Punkt 13 mit der Veränderung der Last. Einem Höchstauftrieb von 108 240 kg entspricht einer Fluidfördermenge von 40 Kubikzentimeter pro Sekunde. Einem Auftrieb von 71 390 kg entspricht eine Fluidfördermenge von 877 Kubikzentimeter pro Sekunde. Die Lager gemäss Punkt 12, 13, 14 eignen sich für konstante oder veränderliche Lasten innerhalb eines mehr oder weniger begrenzten Bereiches.

15. Lager grosser Abmessungen für hohe Lasten mit sechszehn axialen Kanälen mit sechszehn Abbauleitungen gleichen Widerstandes für Lasten veränderlicher Richtung, veränderlichen Sinnes und veränderlicher Intensität.

Für die Ergebnisse der Berechnungen siehe Fig. 7.

Vermerke. – Die Auftriebe und die Schmierflüssigkeitsfördermengen nehmen bei allen Lagern im gleichen Verhältnis zu wie die Einlassdrücke. Die Schmierflüssigkeitsfördermengen bei voller Last und bei Nullast verändern sich ein wenig mehr oder weniger, je nach der Art und der Bemessung des Lagers, mit Ausnahme für die Arten gemäss Punkt 5, 6, 9, 10, 12, 13 und 14.

**Patentansprüche**

1. Hydrostatisches/hydrodynamisches Lager zur Lagerung einer rotierenden Welle in einem feststehenden Gehäuse, wobei die Gleitfläche einer im Gehäuse befestigten Buchse ($B_2$) mit einer Mehrzahl von sich axial erstreckenden, durch axiale Stege (T) voneinander getrennten Kammern (S) versehen ist, die mit Drucköl von einer gemeinsamen Druckquelle gespeist sind, dadurch gekennzeichnet, dass die äussere Oberfläche der Buchse ($B_2$) mit einer entsprechenden Mehrzahl von schraubenförmigen Kanälen versehen ist, die durch eine auf der ersten Buchse ($B_2$) aufgepresste zweite Buchse ($B_3$) radial nach aussen abgedichtet sind, wobei die Kanäle jeweils an einem Ende mit der Druckquelle und an dem anderen Ende mit der entsprechenden Kammer (S) verbunden sind.

2. Hydrostatisches/hydrodynamisches Lager zur Lagerung eines rotierenden Teils auf einer feststehenden Welle, wobei die Gleitfläche einer auf der Welle angebrachten Buchse ($B_2$) mit einer Mehrzahl von sich axial erstreckenden, durch axiale Stege (T) voneinander getrennten Kammern (S) versehen ist, die mit Drucköl von einer gemeinsamen Druckquelle gespeist sind, dadurch gekennzeichnet, dass die innere Oberfläche der Buchse ($B_2$) mit einer entsprechenden Mehrzahl von schraubenförmigen Kanälen versehen ist, die durch eine in der ersten Buchse ($B_2$) eingepresste zweite Buchse ($B_3$) radial nach innen abgedichtet sind, wobei die Kanäle jeweils an einem Ende mit der Druckquelle und an dem anderen Ende mit der entsprechenden Kammer (S) verbunden sind.

3. Lager nach einem der Ansprüche 1 oder 2 zur Aufnahme von Radial- und Axialbelastungen, dadurch gekennzeichnet, dass die Buchsen ($B_2$, $B_3$) konisch ausgebildet sind.

**Claims**

1. A hydrostatic/hydrodinamic bearing for supporting a shaft rotating in a fixed housing; wherein the sliding surface of a journal box ($B_2$) secured in the housing is provided with a plurality of axially extending chambers (S), separated from each other by axial planes (T); said chambers being fed with oil compressed by a common pressure source; the bearing is characterized by that the external surface of the journal box ($B_2$) is provided with a corresponding plurality of helical channels, which are rendered radially proof outwards by means of a second journal box ($B_3$), wherein the channels are in turn connected at an end with the pressure source and at the other end with the corresponding chamber (S).

2. A hydrostatic/hydrodinamic bearing for supporting a part rotating on a fixed shaft, wherein the sliding surface of a journal box ($B_2$) applied

to the shaft is provided with a plurality of axially extending chambers (S), separated from each other by axial planes (T), said chambers being fed with oil compressed by a common source of pressure; the bearing is characterized by that the internal surface of the journal box (B₂) is provided with a corresponding plurality of helical channels, which are rendered radially proof outwards by means of a second journal box (B₃) splined to the first journal box (B₂), wherein the channels are in turn connected at an end with the source of pressure and at the remaining end with the corresponding chamber (S).

3. A bearing radial and axial loads, characterized by that the journal boxes (B₂, B₃) are designed according to a conical shape.

## Revendications

1. Un coussinet hydrostatique/hydrodynamique destiné à supporter un arbre roulant dans un logement fixe, où la surface de glissement d'une coquille (B₂) fixée dans le logement est pourvue d'une pluralité de chambres s'étendant dans une direction axiale (S), séparées l'une de l'autre par des plans axiaux (T), lesdites chambres étants alimentées par une source de pression commune; le coussinet est caractérisé par le fait que la surface externe de la coquille (B₂) est pourvue d'une correspondante pluralité de canaux hélicoïdaux, lesquels sont rendus étanches en direction radiale vers l'extérieur moyennant une seconde coquille (B₃) calée sur la première coquille (B₂), où les canaux sont connectés à la fois à un bout avec la source de pression et à l'autre bout avec la chambre correspondante (S).

2. Un coussinet hydrostatique/hydrodynamique destiné à supporter une partie roulante sur un arbre fixe, où la surface de roulement d'une coquille (B₂) appliquée à l'arbre est pourvue d'une pluralité de chambres s'étendant dans une direction axiale (S), séparées l'une de l'autre par des plans axiaux (T), lesdites chambres étant alimentées par de l'huile comprimée par une source de pression commune; le coussinet est caractérisé par le fait que la surface interne de la coquille (B₂) est pourvue d'une pluralité correspondante des canaux hélicoïdaux, lesquels sont rendus étanches en direction radiale vers l'interne moyennant une seconde coquille (B₃), forcée dans la première coquille (B₂), où les canaux sont connectés à la fois à un bout avec la source de pression et à l'autre bout avec la chambre correspondante (S).

3. Un coussinet selon une des revendications 1 ou 2, destiné à recevoir des sollicitations radiales et axiales, caractérisé par le fait que les coquilles (B₂, B₃) sont projetées d'une façon telle qu'elle ont une forme conique.

0 038 306

FIG **2** B

FIG **2** A

13

FIG **3** ᴮ

FIG **3** ᴬ

$B_1$

$B_2 - B_3$

FIG **4**

$B_3$

$B_2$–$B_1$

FIG 6

| | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Bezugsnummer | 1 | 2 | 3 | 4 | 5 | 6 | 7 | 8 | 9 | 10 | 11 | 12 | 13 | 14 | 15 |
| Durchmesser (mm) | 10 | 10 | 30 | 30 | 30 | 30 | 30 | 60 | 60 | 60 | 60 | 400 | 400 | 400 | 400 |
| Länge (mm) | 80 | 80 | 50 | 50 | 50 | 35 | 50 | 70 | 80 | 50 | 80 | 600 | 600 | 600 | 600 |
| Länge Bund (mm) | 2,5 | 2,5 | 5 | 5 | 5 | 5 | 5 | 10 | 10 | 10 | 10 | 50 | 50 | 50 | 50 |
| Breite Steg (mm) | 2,5 | 2,5 | 5 | 5 | 5 | 5 | 5 | 10 | 10 | 10 | 10 | 80 | 80 | 80 | 20 |
| Radialspiel (mm) | 0,02 | 0,02 | 0,03 | 0,03 | 0,04 | 0,04 | 0,03 | 0,04 | 0,04 | 0,04 | 0,04 | 0,1 | 0,1 | 0,1 | 0,06 |
| Mindestdicke Spalt (mm) | 0,005 | 0,005 | 0,01 | 0,01 | 0,01 | 0,01 | 0,01 | 0,01 | 0,01 | 0,01 | 0,01 | 0,03 | 0,03 | 0,03 | 0,01 |
| Höchstdicke Spalt (mm) | 0,035 | 0,035 | 0,05 | 0,05 | 0,07 | 0,07 | 0,05 | 0,07 | 0,07 | 0,07 | 0,07 | 0,17 | 0,17 | — | 0,11 |
| Einlassdruck (Kg/cm²) | 50 | 50 | 50 | 50 | 50 | 50 | 50 | 50 | 50 | 50 | 50 | 50 | 50 | 50 | 100 |
| Viskosität Öl bei 30°C (Kg s/m²) | 0,01 | 0,01 | 0,01 | 0,01 | 0,01 | 0,01 | 0,01 | 0,01 | 0,01 | 0,01 | 0,01 | 0,01 | 0,01 | 0,01 | 0,01 |
| Statischer Auftrieb (Kg) | 96 | 47 | 175 | 273 | 742 | 495 | 262 | 960 | 2330 | 1330 | 975 | 63250 | 97416 | 108240 | 101321 |
| Fördermenge Schmierflüssigkeit bei Höchstlast (cm³/s) | 1.06 | 0.96 | 3 | 2.26 | 9.16 | 9.16 | 1.92 | 7.81 | 9 | 9 | 5.25 | 157 | 62 | 40 | 44 |
| Fördermenge Schmierflüssigkeit bei Last null (cm³/s) | 1.35 | 0.71 | 2.75 | 2.15 | — | — | 2.44 | 6.72 | — | — | 5.42 | — | — | — | 43.2 |

FIG 7